# EUROPÄISCHE PATENTSCHRIFT

(11) **EP 1 426 093 B1**
(45) Veröffentlichungstag und Bekanntmachung des Hinweises auf die Patenterteilung: **22.06.2011**
(21) Anmeldenummer: 03025892.5
(22) Anmeldetag: 12.11.2003
(51) Int. Cl.: B01D 50/00, B01D 45/14, B01D 47/02, A47L 9/16

(54) **Abscheider für einen Nassauger**
Separator for a wet suction device
Séparateur pour un aspirateur humide

(30) Priorität: 19.11.2002 DE 10253732
(43) Veröffentlichungstag der Anmeldung: 09.06.2004
(73) Patentinhaber: PROAIR GmbH Gerätebau, 88260 Argenbühl-Eglofs (DE)
(72) Erfinder: Roth, Paul, 88316 Isny i. Allgäu (DE); Kreis, Anton, 88069 Tettnang (DE); Grassinger, Helmut, 88260 Argenbühl-Eglofs (DE)
(74) Vertreter: Kohl, Karl-Heinz

(56) Entgegenhaltungen:
- EP-A- 0 890 335
- EP-B- 0 496 837
- WO-A-00/25891
- US-A- 2 233 167
- US-A- 4 735 555
- US-B1- 6 306 199

## Beschreibung

Die Erfindung betrifft einen Abscheider nach dem Oberbegriff des Anspruches 1.

Es sind Abscheider bzw. Separatoren bekannt, die eine Vielzahl von Schlitzen aufweisen. Die Schlitze sind durch einander benachbarte stegförmige Lamellen begrenzt, die einen sich keilförmig radial nach außen verbreiternden Querschnitt aufweisen. Bei solchen Separatoren entsteht ein Luftkanal, bei dem die einströmende Luft beidseitig der Lamellen geführt wird und dadurch eine sehr hohe Geschwindigkeit erreicht. Dadurch gelangen die angesaugten Staubpartikel und Wassertröpfchen in das Innere des Separators, in dem die Staubpartikel und Wassertröpfchen teilweise miteinander vermischt werden. Die feuchten Staub- und Schmutzpartikel lagern sich auf dem Weg vom Abscheider zum Ausgang des Gerätes im Geräteinnern ab. Dies führt zwangsläufig zur Verkeimung des Geräteinneren.

Es ist ein Abscheider bekannt (WO 00/25891 A), dessen Schlitze von Lamellen begrenzt sind. Die Lamellen haben über ihre radiale Länge konstante Breite. Die Schlitze haben ebenfalls konstante Breite und werden durch die Seitenwände der Lamellen begrenzt. Die Seitenwände der Lamellen verlaufen über ihre gesamte radiale Länge parallel zueinander.

Bei einem bekannten Nasssauger (US-A-4 735 555) ist ein Lufteinlass vorgesehen, über den die mit Schmutz/Staubteilchen vermischte Luft angesaugt wird. Sie gelangt durch den Einlass in ein Wasserbad. Von hier aus wird die Luft aufwärts angesaugt und strömt durch Schlitze eines Abscheiders, die durch die Lamellen begrenzt sind. Die Lamellen sind so am Abscheider vorgesehen, dass sie sich in Richtung auf ihr radial äußeres Ende verjüngen. Die durch die Schlitze eintretende Luft strömt ohne Verwirbelung entlang der Seitenwände der Schlitze radial nach innen in den Abscheider.

Der Erfindung liegt die Aufgabe zugrunde, einen Abscheider dieser Art so auszubilden, dass das Eindringen von Staubpartikeln verhindert und eventuell eindringende Staubpartikel zuverlässig im Separator angelagert werden und mitgeführte Wassertröpfchen beim Eintreten in den Separator verdampfen.

Diese Aufgabe wird bei einem Abscheider der gattungsgemäßen Art erfindungsgemäß mit den kennzeichnenden Merkmalen des Anspruches 1 gelöst.

Infolge der erfindungsgemäßen Ausbildung werden die Staubpartikel an der Verbreiterung der Lamellen bereits daran gehindert, in den Separator einzudringen. Eventuell doch in den Abscheider eindringende Staubpartikel werden im Bereich hinter der Verbreiterung der Lamellen durch eine Zwangsverwirbelung in der Verwirbelungskammer verwirbelt, wodurch ein hoher Unterdruck entsteht und die ebenfalls eindringenden Wassertröpfchen verdampfen. Die in der Wirbelzone befindlichen Staubteilchen werden an den inneren Lamellenwänden angelagert. Die verbreiterte Ausbildung der Lamellen hat zudem den Vorteil, dass sie dadurch eine hohe Stabilität aufweisen und eine längere Lebensdauer haben. Schließlich wird durch die Verbreiterung auch erreicht, dass die Spalte zwischen den Lamellen relativ breit sein können und dadurch einfach gereinigt werden können. Die Abscheidung von Schmutz, Staub- und Flüssigkeitspartikeln erfolgt beim erfindungsgemäßen Abscheider in vier Stufen: In einer ersten Abscheidezone werden mit der Luft mitgeführte Schmutz/Staub- und Flüssigkeitspartikel an der äußeren Verbreiterung der Lamellen abgeschlagen und in den Behälterraum zurückgeworfen. In einer zweiten Abscheidezone werden noch mit der Luft mitgeführte Schmutz/Staubpartikel in der zwischen den Lamellenstegen vorhandenen Raumerweiterung abgelagert. In einer dritten Abscheidezone werden in den Verwirbelungsraum eintretende Flüssigkeitströpfchen/Aerosole durch den in dem Verwirbelungsraum herrschenden Unterdruck verdampft, so dass der Verwirbelungsraum dadurch absolut trocken bleibt. Schließlich werden in einer vierten Abscheidezone die Schmutz- und Staubpartikel durch Unterdruckbildung an der axialen Verbreiterung der Lamellen durch Öffnungen hindurch zurück in den Behälterraum geschleudert. Gelangen dennoch wenige Partikel in den Innenraum des Separators, treten diese mit dem Gasstrom wieder aus dem Gerät aus.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: in Seitenansicht und in schematischer Darstellung einen erfindungsgemäßen Abscheider für ein Naßreinigungsgerät,
- Fig. 2: einen Schnitt längs der Linie II-II in Fig. 1
- Fig. 3: in vergrößerter Darstellung mehrere Lamellen des Abscheiders gemäß den Fig. 1 und 2 im Querschnitt,
- Fig. 4 bis 11: jeweils weitere Ausführungsformen von Lamellen eines erfindungsgemäßen Abscheiders,
- Fig. 12: eine Hälfte eines Abscheiders mit einem Spider in montierter Lage,
- Fig. 13: die Einzelheit XIII in Fig. 12 in vergrößerter Darstellung,
- Fig. 14: im Querschnitt weitere Ausführungsformen von Lamellen des erfindungsgemäßen Abscheiders.

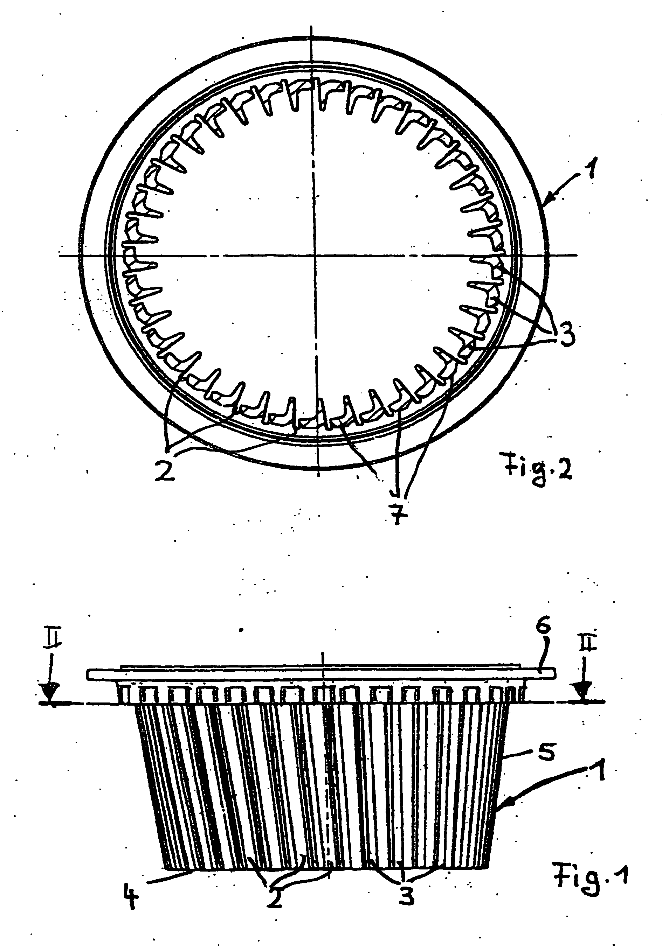

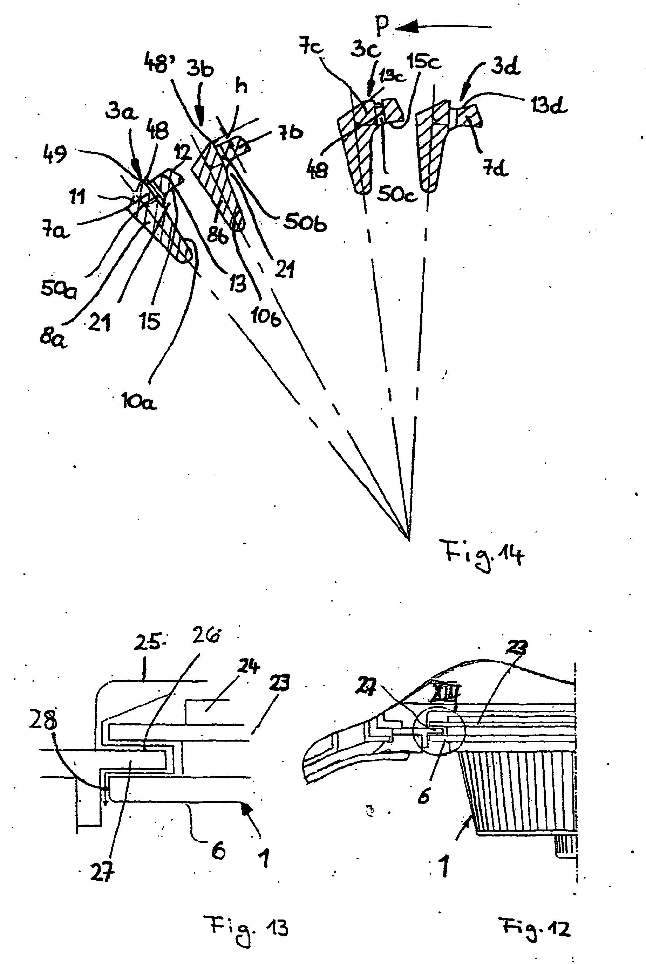

Der in den Fig. 1 und 2 dargestellte Abscheider 1 ist für einen (nicht dargestellten) Naßsauger vorgesehen, der ein wannenförmiges Gehäuseunterteil zur Aufnahme von Flüssigkeit, vorzugsweise Wasser, hat. Auf dem Gehäuseunterteil ist ein Gehäuseoberteil 25 (Fig. 12, 13) aufgesetzt, in dem ein Motor mit einer Motorwelle untergebracht ist, auf deren unterem freien Ende der Abscheider 1 drehfest angeordnet ist. Der Abscheider 1, der mit hoher Drehzahl rotiert, erzeugt eine Saugwirkung. Er weist über den Umfang verteilt angeordnete axiale Schlitze 2 auf, die durch Lamellen bzw. Stege 3 voneinander getrennt sind. Das Gehäuseunterteil weist einen Anschlußstutzen für einen Saugschlauch auf, über den Luft aus dem Umgebungsraum angesaugt und durch das Flüssigkeitsbad im Gehäuseunterteil geleitet wird. Die mit Staub- und Schmutzteilchen beladene Luft strömt durch das Flüssigkeitsbad, in dem ein Großteil der Verunreinigungen zurückgehalten wird. Eventuell noch in der das Bad verlassenden Luft enthaltenen Schmutzteilchen werden zum Abscheider 1 mitgeführt, wo sie durch die Schlitze 2 in den Abscheider 1 eindringen können. Dort werden sie an den Stegwänden innerhalb einer noch zu beschreibenden Wirbelzone angelagert. Ebenfalls mitgeführte Wassertröpfchen werden durch den vorherrschenden Unterdruck verdampft. Die Schmutzpartikel können aber auch durch in den Lamellen 3 eingebrachten Öffnungen 50 zwischen einem Verwirbelungsraum 21 und einer radial äußeren Längsseite 11 bis 13 - wie anhand der Fig. 14 beschrieben wird - in den wannenförmigen Gehäuseunterteil zurückgeführt werden. Außerdem können die Schmutzteilchen auch an den die Schlitze 2 begrenzenden Lamellen 3 weggeschleudert werden, wie noch beschrieben wird.

Wie die Fig. 1 und 2 weiter zeigen, hat der Abscheider 1 Kegelstumpfform mit einem ebenen Boden 4, an den ein sich nach oben verbreitender Kegelmantel 5 anschließt, der die Schlitze 2 aufweist. Der obere Rand 6 des Kegelmantels 5 ragt radial nach außen. In den Fig. 1 und 2 sind die Schlitze 2 gleichmäßig über den Umfang des Abscheiders verteilt angeordnet und erstrecken sich vom Boden 4 bis zum Rand 6. Selbstverständlich können auch weniger, zum Beispiel auch weniger als nur vier Schlitze vorgesehen sein. Die Schlitze sind dann relativ breit. In diesem Fall wird eine optimale Reinigung der angesaugten Luft erreicht. Es steht dann auch nur eine entsprechend geringe Oberfläche zur Verfügung, auf der sich Schmutz- oder Staubpartikel während des Einsatzes ablagern können. Bei einer solchen geringen Schlitzzahl tritt auch ein Selbstreinigungseffekt auf, der dazu führt, daß eventuell vorhandene Ablagerungen an den Lamellen bzw. Stegen 3 wenigstens teilweise wieder entfernt werden. Außerdem läßt sich der Abscheider 1 dann einfach von innen reinigen, indem mit einer Reinigungsbürste in die Zwischenräume zwischen den Lamellen bzw. Stegen gefahren wird.

Der Abscheider 1 rotiert vorzugsweise mit hohen Drehzahlen, die im Bereich von etwa 5.000 U/min bis etwa 20.000 U/min liegen. Die angesaugte Luft tritt im bodennahen Bereich durch die Schlitze 2 in das innere des Abscheiders 1 leichter ein als im entfernten Bereich des Bodens. Innerhalb des Abscheiders strömt die Luft in die Verwirbelungszone zwischen den Lamellenstegen 3. Hierbei werden mitgeführte Staubpartikel angelagert, wohingegen Flüssigkeitspartikel verdampfen, in Gasform sich mit der Luft innerhalb des Abscheiders axial nach oben bewegen und mit dem Luftstrom wieder aus dem Gerät austreten.

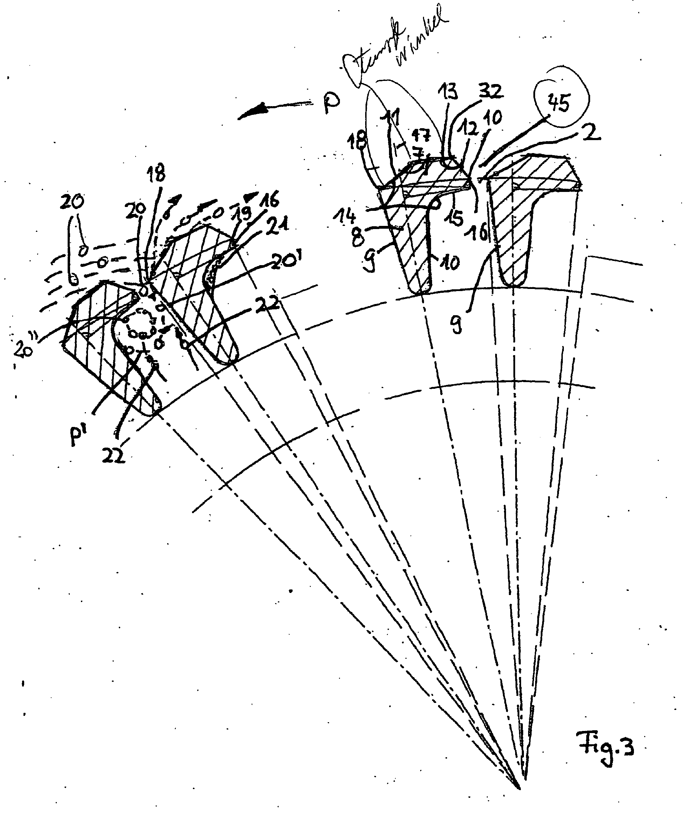

Wie die Fig. 2 und 3 zeigen, haben die über die Höhe des Abscheiders 1 sich erstreckenden Lamellen 3 etwa L-förmigen Querschnitt. Ihre Querstege 7 verlaufen in Umfangsrichtung des Abscheiders 1, während ihre Längsstege 8 radial nach innen gerichtet sind. Der Querschnitt der Längsstege 8 verringert sich radial nach innen. Die Seitenwände 9 und 10 der Längsstege 8 gehen radial innen gekrümmt ineinander über. Die Lamellen 3 sind vorzugsweise gleich ausgebildet.

Die Querstege 7 der Lamellen 3 erstrecken sich entgegen Drehrichtung P des Abscheiders nach hinten. Die Querstege haben an ihrer radial äußeren Längsseite einen vorderen und einen rückwärtigen abgeschrägten Flächenabschnitt 11 und 12. Der vordere Längsabschnitt 11 schließt unter einem kleinen stumpfen Winkel an die Seitenwand 9 des Längssteges 8 an. Der Abschnitt 11 geht unter einem größeren stumpfen Winkel in einen mittleren Abschnitt 13 über, der seinerseits unter einem kleineren stumpfen Winkel in den rückwärtigen Abschnitt 12 übergeht. Die Abschnitte 11 bis 13 erstrecken sich über die Länge der Lamelle 3. Die beiden äußeren Abschnitte 11, 12 sind entgegengesetzt schräg zueinander vorgesehen. Der mittlere Abschnitt 13 liegt tangential zu einem gedachten Kreis um die Drehachse des Abscheiders 1. Außerdem verläuft der mittlere Abschnitt 13 etwa parallel zu einer Innenseite 15 des Quersteges 7. Sie schließt rechtwinklig an einen kurzen, etwa radial verlaufenden Stirnflächenabschnitt 16 an, der unter einem kleinen stumpfen Winkel in den Abschnitt 12 übergeht. Der Stirnflächenabschnitt 16 liegt mit Abstand benachbart zur Seitenwand 9 der benachbarten Lamelle 3.

Die Innenseite 15 des Quersteges 7 geht über einen teilkreisförmig gekrümmten Übergangsabschnitt 14, der auch winklig sein kann, in die Seitenwand 10 des Längssteges 8 über.

Wie Fig. 3 weiter zeigt, verläuft die Innenseite 15 etwa senkrecht zur Längsmittelebene 17 des Längssteges 8, die den vorderen Abschnitt 11 des Quersteges 7 etwa in halber Breite schneidet. Die vordere Kante 18 zwischen der Seitenwand 9 und dem Abschnitt 11 liegt etwa auf gleicher Höhe wie die zwischen dem Stirnflächenabschnitt 16 und dem Abschnitt 12 gebildete Kante 19.

Durch die relativ breite Ausbildung der Außenwandabschnitte 11 und 12 werden Staubpartikel 20 (Fig. 3) bereits vor dem Eindringen in den Abscheider bzw. Separator 1 mit vom Flüssigkeitsbehälter durch den Saugluftstrom hochgespritzte Flüssigkeit benetzt. Dadurch nimmt das Volumen und die Masse der Staubpartikel 20 zu, so daß ein Einströmen in den Separator 1 erschwert wird. Die Schmutzteilchen 20 werden daher von den Flächenabschnitten 11, 12 und 13, wie dargestellt, abgespült, wobei sie zurück in den Flüssigkeitsbehälter fallen und dort in der Flüssigkeit zurückgehalten werden.

Die Außenwandabschnitte 11 und 12 benachbarter Lamellen 3 begrenzen über die Höhe des Abscheiders 1 verlaufende, radial nach innen sich verjüngende Eintrittsbereiche 45, die in die Schlitze 2 münden und durch die die angesaugte Luft in den Abscheider 1 strömen kann. Durch die relativ breite Ausbildung der Querstege 7 der Lamellen 3 sind die am Mantel 5 des Separators 1 vorhandenen Schlitze 2 relativ schmal, wodurch der Separator eine im wesentlichen geschlossene Bauweise hat. Die Anzahl der Schlitze 2 kann bis auf weniger als fünf reduziert werden. In diesem Fall kann noch weniger Staub in den Separator 1 eindringen. Die Schmutzteilchen 20' und/oder feinsten Wassertröpfchen 22 treffen hauptsächlich auf die Außenwandabschnitte 11, an denen sie zurückgeschleudert werden. Über diese Primärabscheidung wird der größte Teil der Schmutz/Staubpartikel 20' zurückgehalten

Eventuell doch noch über die Schlitze 2 in den Separator 1 gelangenden Staub/Schmutzteilchen 20' gelangen in eine Verwirbelungskammer 21, die durch die Innenseite 15, den gekrümmten Übergangsabschnitt 14 und einen Teil der Seitenwand 10 des Längssteges 8 begrenzt wird. In den Verwirbelungskammern 21 werden die Schmutz/Staubteilchen 20' verwirbelt. Durch die Verwirbelung gelangen diese Partikel aus der Luftströmung und lagern sich in Fangtaschen der Stege im Bereich der Innenseite 15 bzw. deren Radius ab. Gleichzeitig werden die durch die engen Schlitze 2 eindringenden Wassertröpfchen in den Bereich der Verwirbelungskammer 21 einem so starken Unterdruck ausgesetzt, daß diese verdampfen. Die Verwirbelungskammern 21 bilden eine Sekundär- und Tertiärabscheidung.

Durch die beschriebene Ausbildung der Lamellen 3 mit dem Quersteg 7 haben die Längsstege 8 einen relativ großen Abstand voneinander, in die der Benutzer des Naßsaugers mit einer Reinigungsbürste leicht und einfach eindringen kann, um in den Verwirbelungskammern 21 festsitzende Schmutz/Staubteilchen zu entfernen.

Die L-förmige Querschnittsausbildung der Lamellen 3 führt zu einer hohen Stabilität der Lamellen. Auch in Umfangs- und Radialrichtung des Abscheiders 1 wird dadurch eine hohe Stabilität erzielt, so daß der Abscheider wesentlich größer als bisher bekannt gefertigt werden kann.

Die L-förmige Querschnittsausbildung der Lamellen 3 hat weiter den Vorteil, daß innerhalb des Separators 1 der Differenzdruck gesteuert werden kann. Dadurch wird eine partielle Selbstspülung zwischen dem Rand 6 des Separators 1 und einem mit Abstand gegenüberliegenden Rand 23 eines Spiders 24 des Gehäuseoberteiles 25 des Naßsauger gewährleistet (vgl. Fig. 12 und 13). In den Spalt 26 zwischen den Rändern 6 und 23 ragt ein Rand 27 des Naßsaugergehäuses 28, wie Fig. 12 und 13 zeigen. Durch den labyrinthartigen Spalt 26 strömt ein Luftstrom 28 vom Inneren des Abscheiders 1 nach außen. Dadurch wird verhindert, daß in den Spalt 26 eindringende Fasern und/oder Staub/Schmutzteilchen nach innen gelangen, so daß ein Verstopfen des Spaltes 26 sicher verhindert wird.

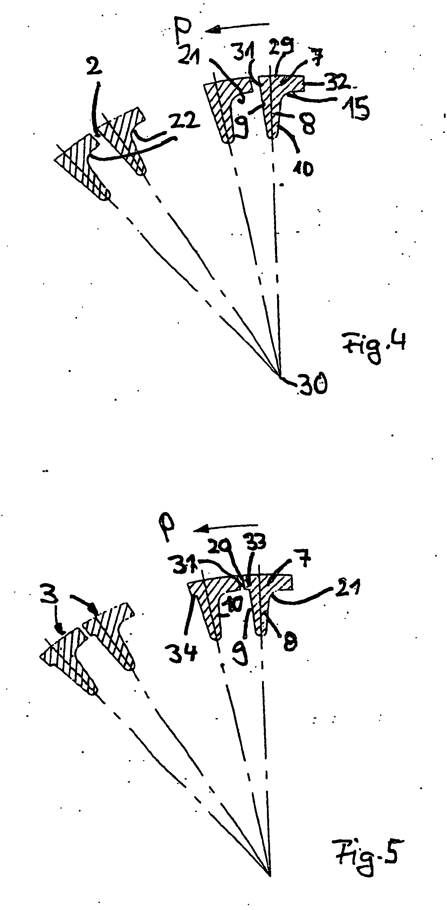

Fig. 4 zeigt eine weitere Ausführungsform von Lamellen 3, die sich nur durch die andere Ausbildung des Quersteges 7 von der zuvor beschriebenen Lamellenausbildung unterscheiden. Der Quersteg 7 hat eine Außenseite 29, die mit großem Krümmungsradius um die Achse 30 des Separators 1 gekrümmt ist. An die Außenseite 29 schließen rechtwinklig die beiden Stirnseiten 31, 32 des Quersteges 7 an. Die in Drehrichtung P vordere Stirnseite 31 fluchtet mit der Seitenwand 9 des Längssteges 8. Die rückwärtige Stirnseite 32 geht rechtwinklig in die Innenseite 15 des Quersteges über. Auch bei dieser Ausführungsform treten die zuvor beschriebenen Vorteile auf, da an den relativ langen Quersteg 7 schon außerhalb des Separators 1 die Staubpartikel mit Flüssigkeit bzw. Wasser benetzt und abgespült werden. Eventuell doch über die Schlitze 2 in den Separator 1 eindringende Schmutz/Staubteilchen 20 werden im Verwirbelungsraum 22, der von der Innenseite 15 und der Seitenwand 10 des Längssteges 8 begrenzt ist, verwirbelt, die Flüssigkeit verdampft und Staubpartikel innerhalb der Verwirbelungskammer an den Seitenflächen angelagert.

Bei der Ausführungsform nach Fig. 5 ist im Unterschied zu der zuvor beschriebenen Ausführungsform lediglich der Quersteg 7 etwas länger ausgebildet und steht in Umfangsrichtung geringfügig über die Seitenwand 9 vor. Die ebene Stirnseite 31 des so gebildeten Vorsprunges 33 geht an der Innenseite über eine Schulterfläche 34 abgerundet in die Seitenwand 9 des Längssteges 8 über. Die Schulterfläche 34 fluchtet im wesentlichen mit der Innenseite 15 des Quersteges 7. Auch bei dieser Ausbildung der Lamellen 3 werden die Schmutz/Staubteilchen vor dem Eindringen in den Separator 1 an dem relativ langen Quersteg 7 abgespült und so am Eintritt gehindert. Eventuell doch noch eindringende Schmutz/Staubteilchen werden durch die Verwirbelung im Verwirbelungsraum 21 an den Seitenflächen angelagert. Durch den relativ großen Abstand einander benachbarter Längsstege 8 kann deren Zwischenraum besonders einfach gereinigt werden. Die relativ schmalen Schlitze 2 gewährleisten in Verbindung mit den breiten Querstegen 7 eine äußerst geschlossene Bauweise des Separators 1.

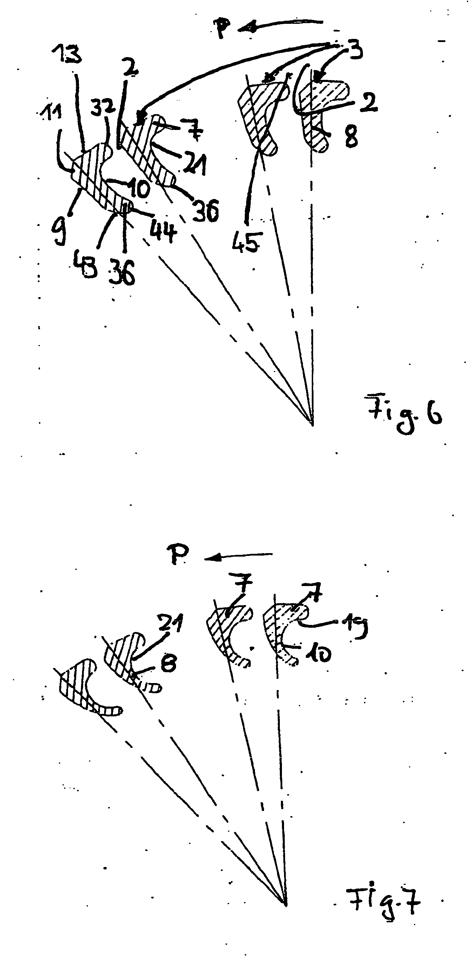

Fig. 6 zeigt Lamellen 3, die denen gemäß Fig. 4 weitgehend entsprechen. Die Querstege 7 haben die in Drehrichtung P vordere Schrägfläche 11, die die Längsseite 9 des Längssteges 8 mit dem mittleren Außenseitenabschnitt 13 des Quersteges 7 verbindet. Die andere Stirnseite 32 des Quersteges 7 ist halbkreisförmig abgerundet. Das radial innere Ende 36 des Längssteges 8 ist leicht entgegen Drehrichtung P nach hinten gebogen, so daß die rückwärtige Seitenwand 10 konkav gebogen ist. Die in Drehrichtung P vordere Seitenwand 9 des Längssteges 8 ist eben und geht am radial inneren Bereich über eine Schrägfläche 43 in eine abgerundete Stirnseite 44 des Längssteges über. Die Schrägfläche 43 ist entgegen Drehrichtung P nach hinten geneigt und schmaler als der schräge Außenseitenabschnitt 11 des Quersteges 7. Durch den langen Quersteg 7 mit der Abschrägung 11 und dem radial innen zwischen dem Quersteg 7 und dem Längssteg 8 gebildeten Verwirbelungsraum 21 wird das Eindringen von Schmutz/Staubteilchen weitgehend verhindert bzw. die doch eindringenden Staubpartikel einfach und schnell entfernt. Der zwischen der Stirnseite 32 des Quersteges 7 und der Schrägfläche 11 der benachbarten Lamelle 3 gebildete Eintrittsbereich 45 erweitert sich vom Schlitz 2 aus radial nach außen, so daß das Verdampfen der Flüssigkeit und das Anlagern der Schmutz/Staubteilchen im Verwirbelungsraum 21 noch besser beschleunigt wird.

Das gleiche gilt für die Ausführungsform nach Fig. 7. Bei dieser Ausführungsform ist der Quersteg 7 im wesentlichen gleich ausgebildet wie bei den Lamellen gemäß Fig. 6. Der Längssteg 8 der Lamellen 3 gemäß Fig. 7 ist jedoch noch stärker gekrümmt und verjüngt sich radial nach innen stärker als bei den Längsstegen 8 nach Fig. 6. Dadurch wird der zwischen der Innenseite 15 des Quersteges 7 und der Seitenwand 10 des Längssteges 8 gebildete Verwirbelungsraum 21 noch vergrößert, so daß eine noch stärkere Verwirbelung erreicht wird.

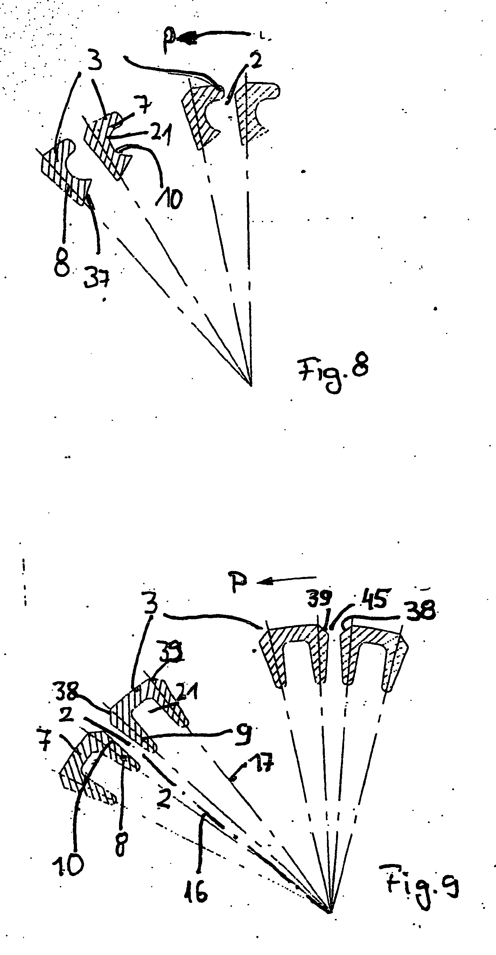

Die Ausführungsform nach Fig. 8 entspricht der nach Fig. 6 mit dem Unterschied, daß die Längsstege 8 der Lamellen 3 etwas kürzer und ein in Drehrichtung P schräg nach außen geneigt verlaufendes Ende 37 aufweisen. Die Seitenwand 10 des Längssteges 8 verläuft so gekrümmt, daß die in Drehrichtung P gemessene Breite des Längssteges 8 vom Quersteg 7 aus zunächst abnimmt und etwa ab halber radialer Länge wieder zunimmt. Im übrigen sind die Lamellen 3 gleich wie bei der Ausführungsform nach Fig. 6. Der Quersteg 7 und der Längssteg 8 begrenzen radial innen die Verwirbelungskammer 21, in der eventuell doch in den Separator eindringende Schmutz/Staubteilchen von der Luft verwirbelt und an den Seitenflächen des Verwirbelungsraumes 21 angelagert werden.

Die Lamellen 3 nach Fig. 9 haben U-förmigen Querschnitt. Ihre Form entspricht im wesentlichen zwei spiegelsymmetrisch zueinander liegenden Lamellen 3 gemäß Fig. 4, deren in Drehrichtung P vordere und hintere Stirnseiten 38 und 39 wie die Stirnseiten 11 der Lamellen 3 nach Fig. 6 abgeschrägt sind. Ihre Längsstege 8 verjüngen sich wieder konisch radial nach innen. Sie sind über einen gemeinsamen Quersteg 7 miteinander verbunden sind. Auch bei dieser Ausführungsform werden die Schmutz/Staubteilchen an den relativ breiten Querstegen 7 mit den abgeschrägten Stirnseiten 38, 39 vor dem Eindringen in den Separator 1 abgeschleudert bzw. abgewaschen. Doch noch durch die Schlitze 2 eindringende Schmutz/Staubteilchen werden in den Verwirbelungsräumen 21 verwirbelt, getrocknet und an den Seitenflächen des Verwirbelungsraumes angelagert. Im Unterschied zu den vorigen Ausführungsbeispielen erstrecken sich die Schlitze 2 über die radiale Länge der Längsstege 8. Da die die Schlitze 2 begrenzenden Seitenwände 9, 10 benachbarter Lamellen 3 radial nach innen divergieren, nimmt die Schlitzbreite radial nach innen zu. Die ebenen Schrägflächen 38, 39 benachbarter Lamellen 3 begrenzen die in die Schlitze 2 führenden Eintrittsbereiche 45, die sich radial nach innen verjüngen. Die Längsebenen 17, 46 der Schlitze 2 und der Längsstege 8 bilden Radialebenen des Abscheiders 1.

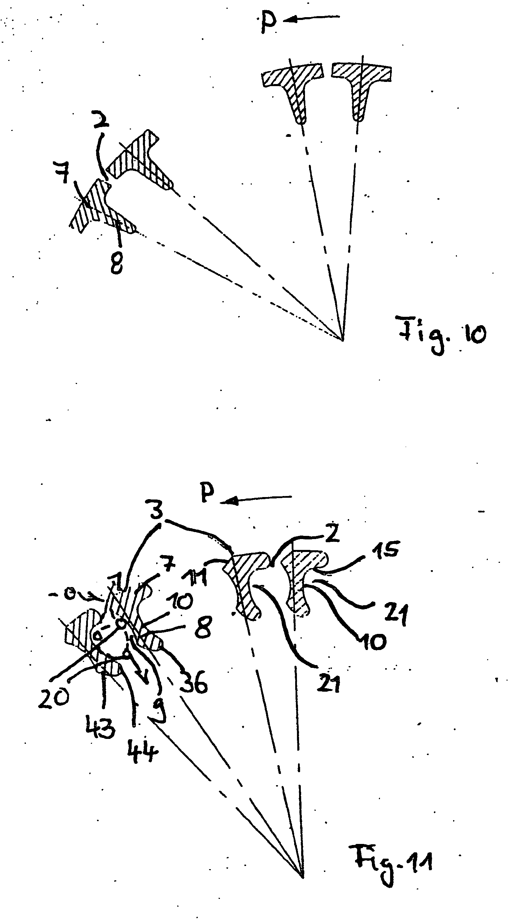

Die Lamellen 3 nach Fig. 10 haben im Querschnitt im wesentlichen T-Form, so daß sie sich von den Lamellen nach Fig. 4 nur dadurch unterscheiden, daß ihre Querstege 7 in Drehrichtung P über beide Seitenwände 9, 10 der Längsstege 8 ragen. Im übrigen entspricht diese Ausführungsform der nach Fig. 4.

Die Lamellen 3 nach Fig. 11 sind weitgehend gleich ausgebildet wie die nach Fig. 6. Von ihnen unterscheiden sie sich dadurch, daß auch die Seitenwände 9 der Längsstege 8 teilkreisförmig konkav abgerundet sind. Die Seitenwände 9 gehen am radial äußeren Ende unter einem rechten Winkel in die Stirnfläche 11 des Quersteges 7 über. Das freie Ende 36 der Längsstege 8 ist wie bei den Lamellen gemäß Fig. 6 mit der Schrägfläche 43 und der abgerundeten Stirnseite 44 versehen. In der Verwirbelungskammer 21 zwischen der Innenseite 15 des Quersteges 7 und der Seitenwand 10 des Längssteges 8 werden die dort verwirbelten Teilchen 20 beschleunigt gegen die gegenüberliegende Seitenwand 9 transportiert und an dieser konkaven Fläche wiederum beschleunigt. Dadurch wird ein noch höherer Unterdruck in der Strömungszone erreicht, so daß die eingebrachte Flüssigkeit zuverlässig verdampft.

## Patentansprüche

1. Abscheider für einen Nasssauger, mit einem Boden (4) und einer Seitenwand, die Schlitze (2) aufweist, die durch Lamellen (3) begrenzt sind und durch die ein Luft/Gasstrom eintritt, der Schmutz/Staubpartikel und/oder Wassertröpfchen enthält,
**dadurch gekennzeichnet, dass** die Lamellen (3) jeweils mindestens eine radial äußere Verbreiterung (7) aufweisen, die durch einen sich in Rotationsrichtung und/oder entgegen Rotationsrichtung (P) erstreckenden Quersteg gebildet ist, und dass die übrigen Lamellenabschnitte (8) durch im Wesentlichen radial verlaufende Längsstege (8) gebildet sind, die sich von der Verbreiterung (7) aus im Wesentlichen radial nach innen erstrecken und mit den Verbreiterungen (7) eine Verwirbelungskammer (21) begrenzen.

2. Abscheider nach Anspruch 1,
**dadurch gekennzeichnet, dass** die Lamellen (3) im Radialschnitt etwa L-Form haben.

3. Abscheider nach Anspruch 1,
**dadurch gekennzeichnet, dass** die Lamellen (3) im Radialschnitt etwa T-Form haben.

4. Abscheider nach Anspruch 1,
**dadurch gekennzeichnet, dass** die Lamellen (3) im Radialschnitt etwa U-Form haben, bei dem die Längsstege (8) im Wesentlichen radial verlaufen.

5. Abscheider nach einem der Ansprüche 1 bis 4,
**dadurch gekennzeichnet, dass** die Verbreiterung (7) mit einem in Rotationsrichtung (P) ragenden, vorteilhaft nur geringe Erstreckung aufweisenden Ansatz (33) über den übrigen Lamellenabschnitt (8) ragt.

6. Abscheider nach einem der Ansprüche 1 bis 5,
**dadurch gekennzeichnet, dass** der in Rotationsrichtung (P) vordere Rand der Verbreiterung (7) durch die Seitenwand (9) des übrigen Lamellenabschnittes (8) gebildet ist.

7. Abscheider nach einem der Ansprüche 1 bis 6,
**dadurch gekennzeichnet, dass** der rückwärtige Rand (32) der Verbreiterung (7) etwa senkrecht zur radial äußeren Seite (29) der Verbreiterung (7) verläuft, die vorteilhaft mit großem Krümmungsradius teilkreisförmig gekrümmt ist.

8. Abscheider nach einem der Ansprüche 1 bis 7,
**dadurch gekennzeichnet, dass** mindestens der in Rotationsrichtung (P) vordere Rand (11) der Verbreiterung (7) abgeschrägt und/oder abgerundet ist.

9. Abscheider nach einem der Ansprüche 1 bis 8,
**dadurch gekennzeichnet, dass** der vordere und rückwärtige Rand (11, 12; 32, 38, 39) der Verbreiterung (7) abgeschrägt und/oder abgerundet ausgebildet ist.

10. Abscheider nach einem der Ansprüche 1 bis 9,
**dadurch gekennzeichnet, dass** der Längssteg (8) V-förmig zueinander verlaufende Seitenflächen (9, 10) aufweist, und dass vorteilhaft die in Rotationsrichtung (P) rückwärtige Seitenfläche (10) und/oder die vordere Seitenfläche (9) des Längssteges (8) teilkreisförmig konvex oder konkav gekrümmt ausgebildet sind.

11. Abscheider nach Anspruch 10,
**dadurch gekennzeichnet, dass** die vordere Seitenfläche (9) mit größerem Krümmungsradius gekrümmt ist als die rückwärtige Seitenfläche (10).

12. Abscheider nach einem der Ansprüche 1 bis 11,
**dadurch gekennzeichnet, dass** das radial innere Ende (36) des Längssteges (8) mindestens teilkreisförmig abgerundet ist.

13. Abscheider nach einem der Ansprüche 9 bis 12,
**dadurch gekennzeichnet, dass** die in Rotationsrichtung (P) vordere und rückwärtige Schrägfläche (11, 12) der Verbreiterung (7) etwa gleich breit sind.

14. Abscheider nach einem der Ansprüche 1 bis 13,
**dadurch gekennzeichnet, dass** die vordere und/oder rückwärtige Schrägfläche (11, 12) über einen mittleren Flächenabschnitt (13) der Verbreiterung (7) miteinander verbunden sind, zu dem die rückwärtige Schrägfläche (12) steiler verläuft als die vordere Schrägfläche (11).

15. Abscheider nach einem der Ansprüche 1 bis 14,
**dadurch gekennzeichnet, dass** die rückwärtige Schrägfläche (12) über einen schmalen, vorzugsweise im Wesentlichen senkrecht an die Innenseite (15) der Verbreiterung (7) anschließenden Stirnflächenabschnitt (16) in die Innenseite (15) der Verbreiterung (7) übergeht.

16. Abscheider nach Anspruch 14 oder 15,
**dadurch gekennzeichnet, dass** die Innenseite (15) der Verbreiterung (7) etwa parallel zum mittleren Flächenabschnitt (13) der Verbreiterung (7) verläuft.

17. Abscheider für einen Nasssauger, mit einem Boden (4) und einer Seitenwand, die Schlitze (2) aufweist, die durch Lamellen (3a bis 3d) begrenzt sind und durch die ein Luft/Gasstrom eintritt, der Schmutz/Staubpartikel und/oder Wassertröpfchen enthält, nach einem der Ansprüche 1 bis 16,
**dadurch gekennzeichnet, dass** die Lamellen (3a bis 3d) wenigstens eine Öffnung (50a bis 50d) aufweisen, die in die radiale Außenseite der Lamellen (3a bis 3d) und vorzugsweise in die Verwirbelungskarnmer (21) mündet.

18. Abscheider nach einem der Ansprüche 1 bis 17,
**dadurch gekennzeichnet, dass** die Lamelle (3a bis 3d) an ihrer Außenseite einen einen Unterdruckbereich bildenden Absatz (48, 48') aufweist, der in Drehrichtung (P) des Abscheiders (1) den Unterdruckbereich nach vorne begrenzt, der in Drehrichtung (P) nach hinten offen ist.

## Claims

1. A separator for a wet suction apparatus, having a bottom (4) and a lateral wall with slots (2) which are bounded by fins (3) and though which there enters an air/gas stream containing dirt/dust particles and/or water droplets, **characterised in that** the fins (3) each have at least one radially outer widening (7) formed by a transverse member extending in the rotational direction and/or in the opposite direction to the rotational direction (P), and **in that** the remaining fin portions (8) are formed by longitudinal members (8), running substantially radially, which extend substantially radially inwards from the widening (7) and which together with the widenings (7) bound a vortex chamber (21).

2. A separator according to claim 1, **characterised in that** the fins (3) are substantially L-shaped in radial section.

3. A separator according to claim 1, **characterised in that** the fins (3) are substantially T-shaped in radial section.

4. A separator according to claim 1, **characterised in that** the fins (3) are substantially U-shaped in radial section, the longitudinal members (8) running substantially radially.

5. A separator according to any one of claims 1 to 4, **characterised in that** the widening (7) projects beyond the remaining fin portion (8) by means of an extension piece (33) which projects in the rotational direction (P) and which advantageously extends only slightly.

6. A separator according to any one of claims 1 to 5, **characterised in that** the front edge, viewed in the rotational direction (P), of the widening (7) is formed by the lateral wall (9) of the remaining fin portion (8).

7. A separator according to any one of claims 1 to 6, **characterised in that** the rear edge (32) of the widening (7) runs substantially perpendicular to the radially outer side (29) of the widening (7), which outer side (29) is advantageously curved, with a large radius of curvature, in the form of a partial circle.

8. A separator according to any one of claims 1 to 7, **characterised in that** at least the front edge (11), viewed in the rotational direction (P), of the widening (7) is bevelled and/or rounded.

9. A separator according to any one of claims 1 to 8, **characterised in that** the front and rear edge (11, 12; 32, 38, 39) of the widening (7) are bevelled and/or rounded.

10. A separator according to any one of claims 1 to 9, **characterised in that** the longitudinal member (8) has lateral surfaces (9, 10) running towards one another in a V shape manner, and **in that** advantageously the rear lateral surface (10), viewed in the rotational direction (P), and/or the front lateral surface (9) of the longitudinal member (8) are convexly or concavely curved in the form of a partial circle.

11. A separator according to claim 10, **characterised in that** the front lateral surface (9) is curved with a larger radius of curvature than the rear lateral surface (10).

12. A separator according to any one of claims 1 to 11, **characterised in that** the radially inner end (36) of the longitudinal member (8) is at least rounded in the form of a partial circle.

13. A separator according to any one of claims 9 to 12, **characterised in that** the front and rear inclined surfaces (11, 12), viewed in the rotational direction (P), of the widening (7) are of substantially the same width.

14. A separator according to any one of claims 1 to 13, **characterised in that** the front and/or rear inclined surfaces (11, 12) are connected to one another via a middle surface portion (13) of the widening (7), towards which the rear inclined surface (12) runs more steeply than the front inclined surface (11).

15. A separator according to any one of claims 1 to 14, **characterised in that** the rear inclined surface (12) becomes the inner face (15) of the widening (7) via a narrow end-face portion (16) which preferably joins to the inner face (15) of the widening (17) in a substantially perpendicular manner.

16. A separator according to claim 14 or 15, **characterised in that** the inner face (15) of the widening (7) runs substantially parallel to the middle surface portion (13) of the widening (7).

17. A separator for a wet suction apparatus, having a bottom (4) and a lateral wall with slots (2) which are bounded by fins (3a to 3d) and though which there enters an air/gas stream containing dirt/dust particles and/or water droplets, according to any one of claims 1 to 16, **characterised in that** the fins (3a to 3d) have at least one opening (50a to 50d) opening into the radial exterior of the fins (3a to 3d) and preferably into the vortex chamber (21).

18. A separator according to any one of claims 1 to 17, **characterised in that** the fin (3a to 3d) has, at its exterior, a shoulder (48, 48'), forming a low-pressure region, which bounds the low-pressure region forwards in the rotational direction (P) of the separator (1), the low-pressure region being open rearwards in the rotational direction (P).

## Revendications

1. Séparateur pour un aspirateur humide, comprenant un fond (4) et une paroi latérale présentant des fentes (2), qui sont délimitées par des lamelles (3) et à travers lesquelles pénètre un écoulement de gaz/air qui renferme des particules de saletés/poussières et/ou des gouttelettes d'eau,
**caractérisé en ce que** les lamelles (3) présentent chacune au moins un élargissement (7) radialement extérieur, qui est formé par une nervure transversale s'étendant dans le sens de rotation et/ou à l'encontre du sens de rotation (P), et **en ce que** les tronçons de lamelle (8) restants sont formés par des nervures longitudinales (8) s'étendant sensiblement de manière radiale, qui, à partir de l'élargissement (7), s'étendent sensiblement de manière radiale vers l'intérieur et délimitent, avec les élargissements (7), une chambre de tourbillonnement (21).

2. Séparateur selon la revendication 1,
**caractérisé en ce que** les lamelles (3) présentent, en coupe radiale, sensiblement une forme en L.

3. Séparateur selon la revendication 1,
**caractérisé en ce que** les lamelles (3) présentent, en coupe radiale, sensiblement une forme en T.

4. Séparateur selon la revendication 1,
**caractérisé en ce que** les lamelles (3) présentent, en coupe radiale, sensiblement une forme en U, dans lequel les nervures longitudinales (8) s'étendent sensiblement de manière radiale.

5. Séparateur selon l'une des revendications 1 à 4,
**caractérisé en ce que** l'élargissement (7) dépasse du tronçon de lamelle restant (8), avec un appendice (33) en saillie dans le sens de rotation (P) et ne présentant avantageusement qu'une faible étendue.

6. Séparateur selon l'une des revendications 1 à 5,
**caractérisé en ce que** le bord avant de l'élargissement (7), en se référant au sens de rotation (P), est formé par la paroi latérale (9) du tronçon de lamelle restant (8).

7. Séparateur selon l'une des revendications 1 à 6,
**caractérisé en ce que** le bord arrière (32) de l'élargissement (7) s'étend environ de manière perpendiculaire au côté (29) radialement extérieur de l'élargissement (7), qui présente avantageusement une courbure en secteur circulaire de grand rayon de courbure.

8. Séparateur selon l'une des revendications 1 à 7,
**caractérisé en ce qu'**au moins le bord avant (11) de l'élargissement (7), en se référant au sens de rotation (P), est chanfreiné et/ou arrondi.

9. Séparateur selon l'une des revendications 1 à 8,
**caractérisé en ce que** le bord avant et le bord arrière (11, 12 ; 32, 38, 39) de l'élargissement (7) sont d'une configuration chanfreinée et/ou arrondie.

10. Séparateur selon l'une des revendications 1 à 9,
**caractérisé en ce que** la nervure longitudinale (8) présente des surfaces latérales (9, 10) s'étendant en forme de V l'une vers l'autre, et **en ce que** la surface latérale arrière (10), en se référant au sens de rotation (P), et/ou la surface latérale avant (9) de la nervure longitudinale (8), sont d'une configuration courbée en secteur circulaire, de manière convexe ou concave.

11. Séparateur selon la revendication 10,
**caractérisé en ce que** la surface latérale avant (9) est courbée avec un rayon de courbure plus grand que la surface latérale arrière (10).

12. Séparateur selon l'une des revendications 1 à 11,
**caractérisé en ce que** l'extrémité (36) radialement intérieure de la nervure longitudinale (8) est arrondie au moins selon une forme de secteur circulaire.

13. Séparateur selon l'une des revendications 9 à 12,
**caractérisé en ce que** la surface oblique de chanfrein avant et/ou la surface oblique de chanfrein arrière (11, 12) de l'élargissement (7), en se référant au sens de rotation (P), sont environ de même largeur.

14. Séparateur selon l'une des revendications 1 à 13,
**caractérisé en ce que** la surface oblique de chanfrein avant et/ou la surface oblique de chanfrein arrière (11, 12) sont reliées l'une à l'autre par l'intermédiaire d'un tronçon de surface central (13) de l'élargissement (7), par rapport auquel la surface oblique de chanfrein arrière (12) s'étend de manière plus pentue que la surface oblique de chanfrein avant (11).

15. Séparateur selon l'une des revendications 1 à 14,
**caractérisé en ce que** la surface oblique de chanfrein arrière (12) se raccorde au côté intérieur (15) de l'élargissement (7), par l'intermédiaire d'un tronçon de surface frontale (16) étroit, qui pour sa part se raccorde de préférence sensiblement de manière perpendiculaire au côté intérieur (15) de l'élargissement (7).

16. Séparateur selon la revendication 14 ou la revendication 15,
**caractérisé en ce que** le côté intérieur (15) de l'élargissement (7) s'étend environ de manière parallèle au tronçon de surface central (13) de l'élargissement (7).

17. Séparateur pour un aspirateur humide, comprenant un fond (4) et une paroi latérale présentant des fentes (2), qui sont délimitées par des lamelles (3a à 3d) et à travers lesquelles pénètre un écoulement de gaz/air qui renferme des particules de saletés/poussières et/ou des gouttelettes d'eau, selon l'une des revendications 1 à 16,
**caractérisé en ce que** les lamelles (3a à 3d) présentent au moins une ouverture (50a à 50d) qui débouche dans le côté extérieur radial des lamelles (3a à 3d) et de préférence dans la chambre de tourbillonnement (21).

18. Séparateur selon l'une des revendications 1 à 17,
**caractérisé en ce que** la lamelle (3a à 3d) présente sur son côté extérieur, un décrochement (48, 48') formant une zone de dépression et délimitant, vers l'avant en se référant au sens de rotation (P) du séparateur (1), la zone de dépression, qui est ouverte vers l'arrière en se référant au sens de rotation (P).
